# FASCICULE DE BREVET EUROPEEN

(11) **EP 3 074 701 B1**
(45) Date de publication et mention de la délivrance du brevet: **14.07.2021**
(21) Numéro de dépôt: 14830546.9
(22) Date de dépôt: 01.12.2014
(51) Int. Cl.: F25B 21/00

(54) **APPAREIL THERMIQUE MAGNETOCALORIQUE**
MAGNETOKALORISCHE WÄRMEVORRICHTUNG
MAGNETOCALORIC HEAT APPARATUS

(30) Priorité: 29.11.2013 FR 1361816
(43) Date de publication de la demande: 05.10.2016
(73) Titulaire: UBIBLUE, 67000 Strasboug (FR)
(72) Inventeur: MULLER, Christian, F-67000 Strasbourg (FR); BRUMPTER, Guillaume, F-67960 Entzheim (FR)
(74) Mandataire: Koelbel, Caroline
(86) Numéro de dépôt international: PCT/IB2014/002621
(87) Numéro de publication internationale: WO 2015/079313

(56) Documents cités:
- WO-A1-2013/076571
- US-A1- 2010 095 686
- US-A1- 2011 041 514
- US-A1- 2011 067 415
- None

## Description

### Domaine technique :

La présente invention concerne un appareil thermique magnétocalorique comportant au moins:
- trois rotors magnétiques coaxiaux, couplés à un actionneur pour être mobiles en rotation autour d'un axe de rotation, dont deux rotors magnétiques sont à simple face et un rotor magnétique central disposé entre les deux autres est à double face, lesdits rotors magnétiques étant pourvus de pôles magnétiques diamétralement opposés, alignés entre eux, et délimitant entre eux des entrefers situés dans deux plans d'entrefer parallèles,
- deux supports d'éléments magnétocaloriques disposés dans lesdits plans d'entrefer,
- des éléments magnétocaloriques portés par lesdits deux supports et reliés fluidiquement entre eux par des liaisons fluidiques dans lesquelles circule au moins un fluide caloporteur et formant au moins une boucle fluidique déterminée, et
- des moyens de déplacement dudit fluide caloporteur dans ladite boucle fluidique à travers lesdits éléments magnétocaloriques selon un mouvement alterné de va-et-vient en fonction des cycles magnétiques créés par lesdits rotors magnétiques.

### Technique antérieure

La technologie du froid magnétique à température ambiante est connue depuis plus d'une trentaine d'années et on connaît ses avantages en termes d'écologie et de développement durable. On connaît également ses limites quant à sa puissance calorifique utile et à son rendement thermique. Dès lors, les recherches menées dans ce domaine tendent toutes à améliorer les performances des appareils thermiques magnétocaloriques, en jouant sur les différents paramètres, tels que l'intensité du champ magnétique, les performances du matériau magnétocalorique, la surface d'échange thermique entre le fluide caloporteur et les éléments magnétocaloriques, les performances des échangeurs de chaleur, etc.

Aujourd'hui, les développements reposent sur l'optimisation des appareils en vue, d'une part, de pouvoir les fabriquer en grande série et, d'autre part, de leur garantir une durée de vie importante. En outre, un élément supplémentaire entre en considération dans la conception de ce type d'appareils thermiques magnétocaloriques, et consiste en leur compacité, indispensable dans de nombreux domaines d'application. En effet, en plus de devoir présenter une efficacité énergétique exploitable, un appareil thermique magnétocalorique doit également présenter une taille ou un encombrement relativement faible permettant par exemple de l'intégrer dans un appareil domestique, un véhicule, etc. existant sur le marché ou neuf.

Un appareil thermique magnétocalorique est constitué de plusieurs éléments indispensables à son fonctionnement. Parmi ces éléments indispensables figurent les matériaux dits magnétocaloriques dont la température varie en fonction du champ magnétique auquel ils sont soumis. Plus particulièrement, le matériau magnétocalorique s'échauffe de manière quasi-instantanée quand il est placé dans un champ magnétique ou soumis à un champ magnétique intense, et il se refroidit suivant une même dynamique thermique quand il est retiré du champ magnétique ou soumis à un champ magnétique faible. La variation de champ magnétique est générée par un système ou arrangement magnétique qui constitue un autre élément essentiel et qui peut par exemple être réalisé soit par des électroaimants alimentés par un courant variable, soit par un assemblage d'aimants permanents en déplacement relatif par rapport aux matériaux magnétocaloriques. Plus la quantité de matériau magnétocalorique est importante dans un appareil thermique, plus la puissance thermique de cet appareil est susceptible d'être importante.

Pour extraire l'énergie des phases ou cycles magnétiques, constitué(e)s chacun(e) par une aimantation ou magnétisation et par une désaimantation ou démagnétisation, on utilise un fluide caloporteur liquide ou gazeux. Ce fluide caloporteur est mis en circulation pour entrer en contact thermique avec lesdits matériaux magnétocaloriques de sorte qu'il se réchauffe au contact du matériau magnétocalorique lors d'une phase dite de magnétisation, et se refroidit au contact du matériau magnétocalorique lors d'une phase dite de démagnétisation. De manière classique, le fluide caloporteur circule dans des canaux rectilignes ou des pores débouchants existants ou créés dans le matériau magnétocalorique. Cette circulation correspondant à un flux hydraulique du fluide, préférentiellement en mode laminaire, de manière à obtenir une surface d'échange maximale, avec une perte de charge hydraulique minimale.

Enfin, afin de pouvoir exploiter l'appareil thermique magnétocalorique, ce dernier doit être relié thermiquement directement ou par l'intermédiaire d'échangeurs thermiques à l'environnement ou à l'application vers laquelle il faut échanger et/ou évacuer l'énergie thermique produite.

Les besoins actuels dans le domaine des appareils thermiques magnétocaloriques se concentrent sur la simplicité de conception et de montage, ainsi que sur la réduction de l'encombrement de ces appareils.

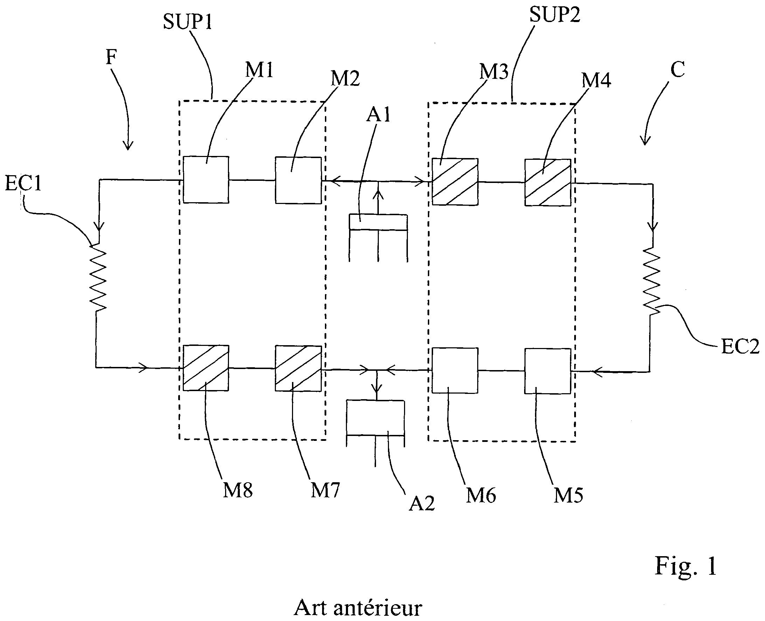

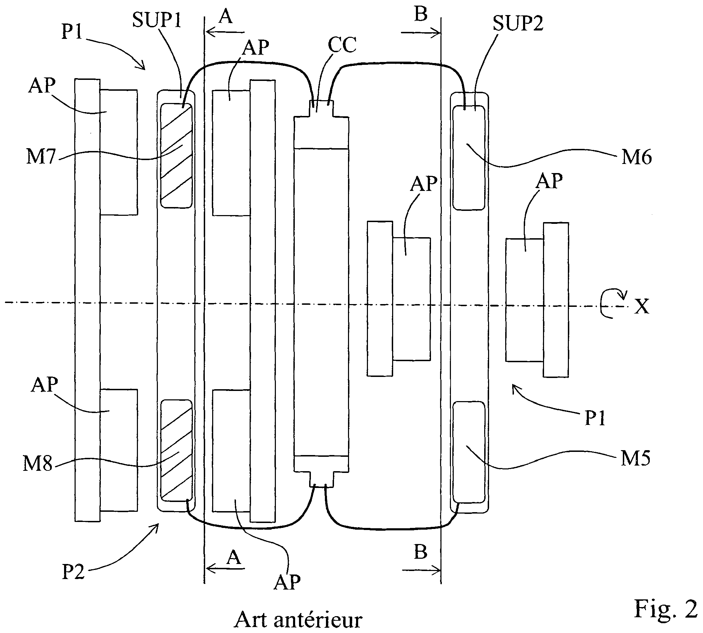

A cet effet, la demanderesse a développé un appareil thermique magnétocalorique tel qu'illustré schématiquement dans les figures 1, 2 et 3, en référence à la publication WO 2013/076571. La figure 1 représente une boucle fluidique à un instant t reliant des éléments magnétocaloriques M1, M2, M7, M8 et M3, M4, M5, M6, montés respectivement sur deux supports SUP1 et SUP2. Les éléments magnétocaloriques M3, M4, M8, M7 soumis à un champ magnétique sont représentés par un rectangle hachuré et les éléments magnétocaloriques M1, M2, M6, M5 hors du champ magnétique sont simplement représentés par un rectangle. L'intérêt de relier deux éléments magnétocaloriques M1 et M2, M3 et M4, M5 et M6, M7 et M8 qui sont dans un même état magnétique - c'est-à-dire tous les deux soumis à un champ magnétique ou non - entre un échangeur thermique EC1 ou EC2 et un actionneur de fluide A1 ou A2, permet d'augmenter le gradient de température obtenu en régime établi entre les extrémités chaude C et froide F de l'appareil thermique magnétocalorique. Dans cet appareil, le champ magnétique est obtenu par deux unités magnétiques comportant chacune deux rotors magnétiques tournants sur lesquels sont montés des aimants permanents AP (voir figure 2). Au total, l'appareil comporte de ce fait quatre rotors magnétiques. Les aimants permanents de chaque unité magnétique forment deux pôles P1, P2 disposés sensiblement à 180° l'un de l'autre, en d'autre termes, diamétralement opposés par rapport à l'axe de rotation X desdites unités magnétiques. Les deux unités magnétiques sont décalées sur le même axe de rotation X, selon un angle de 90 degrés, comme cela ressort de la figure 2. De manière logique, le dispositif mettant en circulation le fluide caloporteur dans le circuit fluidique reliant les éléments magnétocaloriques des deux supports SUP1 et SUP2 est disposé entre les deux unités magnétiques. Sa présence a pour inconvénient majeur d'augmenter le volume de l'appareil thermique magnétocalorique (selon l'axe longitudinal X - voir notamment la figure 2). Ce dispositif comporte notamment une came de commande CC montée en rotation sur l'axe de rotation X agencée pour déplacer les pistons des actionneurs A1, A2.

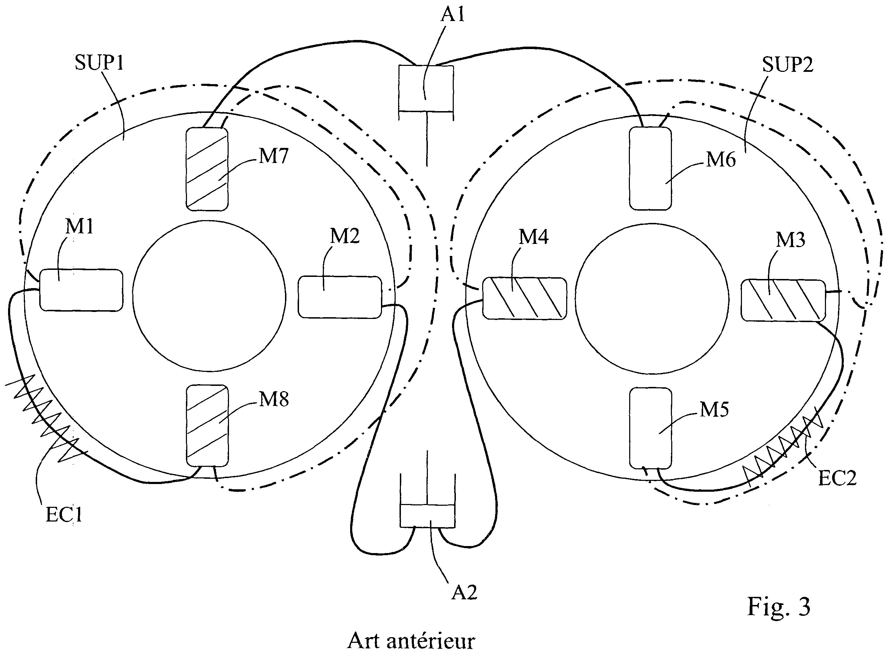

La figure 3 est une vue représentant les supports SUP1 et SUP2 des éléments magnétocaloriques, vus selon les plans A et B de la figure 2, et reliés fluidiquement entre eux par des tuyaux formant un circuit fluidique. L'on constate que la mise en œuvre du circuit fluidique est complexe et encombrante et que la longueur de tuyaux nécessaires est également très importante. L'on observe notamment que quatre tuyaux identifiés par un trait mixte fin parcourent chacun la demi-circonférence des supports SUP1, SUP2. Ces quatre tuyaux correspondent à la mise en relation fluidique d'éléments magnétocaloriques d'un même support SUP1, SUP2 qui sont dans un même état magnétique (M8 et M7, M1 et M2 ; M4 et M3, M6 et M5). La conséquence directe de ces longueurs de tuyaux importantes est une perte de charge entraînant une diminution de l'efficacité de l'appareil et une perte de rendement, car le fluide caloporteur contenu dans les liaisons fluidiques n'est pas exploité complètement en raison d'un volume mort élevé, et est de plus susceptible d'entraîner des pertes thermiques en augmentant les surfaces d'échange avec l'environnement.

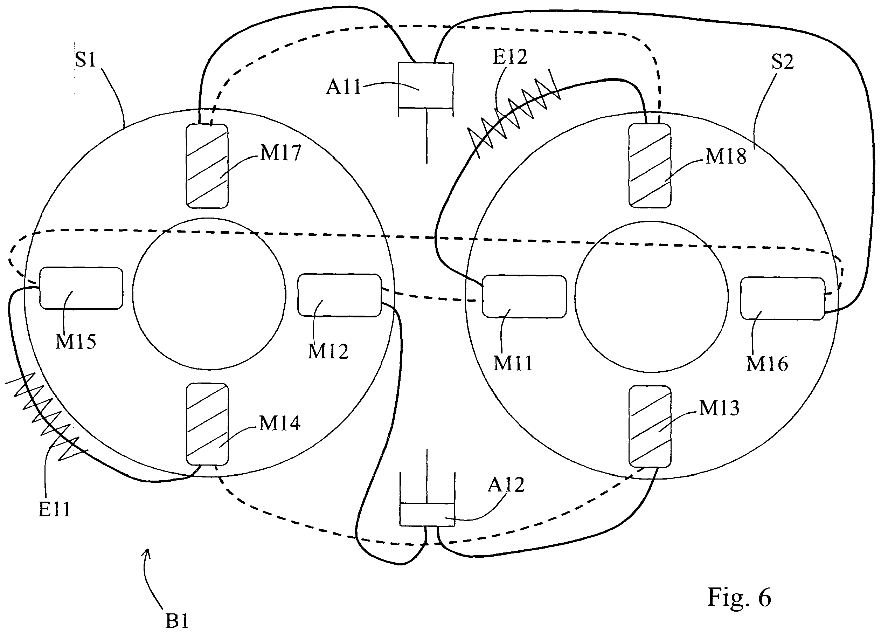

Pour réduire l'encombrement de cet appareil thermique magnétocalorique, la demanderesse a développé un générateur magnétique comportant trois rotors magnétiques au lieu de quatre, coaxiaux et parallèles, délimitant entre eux deux entrefers parallèles. Cet agencement a l'avantage de réduire le volume et le poids de l'appareil thermique, en comparaison avec celui décrit en référence aux figures 1 à 3. Un exemple d'un tel système magnétique est décrit dans la publication FR 2 987 433 (voir notamment figure 6) et dans la demande de brevet français FR 12/57323 (voir notamment figure 12) déposées par la demanderesse. Toutefois, le circuit de distribution du fluide caloporteur tel que décrit dans l'appareil des figures 1 à 3 n'est pas compatible avec un système magnétique à trois rotors magnétiques. En effet, dans une telle configuration, les éléments magnétocaloriques disposés sensiblement en regard les uns des autres, dans les deux supports situés dans les entrefers, sont tous dans un même état magnétique, puisque les pôles magnétiques formés par les rotors magnétiques sont obligatoirement alignés. A l'inverse, dans la configuration précédente comportant deux unités magnétiques distinctes, les pôles magnétiques pouvaient être décalés ou déphasés de 90° par exemple, engendrant un décalage angulaire dans l'état de magnétisation des éléments magnétocaloriques disposés sensiblement en regard les uns des autres.

En outre, la publication US 2011/0067415 A1 décrit un appareil thermique magnétocalorique comportant plusieurs étages d'éléments magnétocaloriques entre plusieurs étages de rotors magnétiques. Toutefois, les éléments magnétocaloriques sont reliés entre eux parallèlement et sont intégrés dans une seule et unique boucle fluidique.

### Exposé de l'invention :

La présente invention vise à proposer un appareil thermique magnétocalorique comportant trois rotors magnétiques coaxiaux, alignés et formant deux plans d'entrefers dans lesquels sont positionnés des supports comportant des matériaux magnétocaloriques, cet appareil présentant un encombrement optimisé et dans lequel le circuit hydraulique et son système d'entraînement est facile à mettre en œuvre.

Ce but est atteint par un appareil thermique magnétocalorique du genre indiqué en préambule, caractérisé en ce que lesdites liaisons fluidiques relient en série deux-à-deux dans ladite boucle fluidique des éléments magnétocaloriques appartenant respectivement aux deux supports, lesdits éléments magnétocaloriques reliés deux-à-deux étant dans un même état magnétique et positionnés en regard l'un de l'autre.

Une telle configuration ou structure rotative dans laquelle le système magnétique est en déplacement relatif par rapport aux éléments magnétocaloriques a l'avantage de présenter un bon ratio de matériau magnétocalorique par volume utilisé. Etant donné que la puissance thermique de l'appareil thermique dépend notamment de la quantité de matériau magnétocalorique utilisée, une telle disposition est effectivement très avantageuse.

Selon l'invention, chaque boucle fluidique peut comporter des premiers éléments magnétocaloriques de chaque support dans un état magnétique identique et des seconds éléments magnétocaloriques de chaque support dans un état magnétique inverse, et lesdits moyens de déplacement peuvent être diamétralement opposés et agencés pour déplacer le fluide caloporteur dans deux sens opposés.

Lesdits moyens de déplacement comprennent avantageusement des actionneurs positionnés de manière centrale par rapport au plan médian de l'appareil thermique passant par le rotor magnétique central.

Afin d'optimiser l'encombrement de l'appareil, ledit rotor magnétique central peut comporter au moins un moyen de commande desdits actionneurs.

En outre, le moyen de commande des actionneurs peut comporter deux profils de came, chaque profil de came étant agencé pour entraîner un des deux actionneurs de chaque boucle fluidique. En d'autres termes, une partie des actionneurs est entraînée par un profil de came et l'autre partie des actionneurs de l'appareil est entraînée par l'autre profil de came.

Selon l'invention, les profils de came peuvent être identiques, mais décalés d'un angle de 90° autour de l'axe de rotation.

Bien entendu, l'appareil selon l'invention peut comporter de préférence plusieurs boucles fluidiques et les actionneurs associés aux boucles fluidiques peuvent être uniformément répartis autour de l'axe de rotation.

Selon l'invention, les éléments magnétocaloriques portés par lesdits supports peuvent être disposés de manière symétrique par rapport au plan médian de l'appareil thermique passant par le rotor magnétique central.

Toutes les boucles fluidiques de l'appareil thermique peuvent être reliées fluidiquement à un échangeur thermique commun au niveau du côté froid de l'appareil thermique et/ou à un échangeur thermique commun au niveau du côté chaud de l'appareil thermique. En variante, chaque boucle fluidique peut être reliée fluidiquement à un échangeur thermique qui lui est associé au niveau du côté froid de l'appareil thermique et/ou à un échangeur thermique qui lui est associé au niveau du côté chaud de l'appareil thermique.

Selon l'invention, chaque rotor peut en outre comporter au moins deux paires de pôles magnétiques. Ils peuvent par exemple comporter quatre ou six pôles, c'est-à-dire deux ou trois paires de pôles diamétralement opposés.

De préférence, le fluide caloporteur est un liquide. A cet effet, il est par exemple possible d'utiliser de l'eau pure ou additionnée d'antigel, un produit glycolé ou une saumure.

### Description sommaire des dessins :

La présente invention et ses avantages apparaîtront mieux dans la description suivante de modes de réalisation donnés à titre d'exemples non limitatifs, en référence aux dessins annexés, dans lesquels:
- la figure 1 est une vue schématique d'une boucle fluidique d'un appareil thermique magnétocalorique selon l'art antérieur,
- la figure 2 est une vue schématique en coupe axiale de l'appareil selon l'art antérieur correspondant à la boucle fluidique de la figure 1,
- la figure 3 représente l'ensemble des liaisons fluidiques ou conduits d'une boucle fluidique de l'appareil de la figure 2, illustrant les supports des éléments magnétocaloriques vus en élévation selon les plans A et B de la figure 2,
- la figure 4 est une vue schématique en coupe axiale d'un appareil thermique selon l'invention,
- la figure 5 représente schématiquement une boucle fluidique de l'appareil de la figure 4,
- la figure 6 représente l'ensemble des liaisons fluidiques d'une boucle fluidique de l'appareil de la figure 4, illustrant les supports des éléments magnétocaloriques vus en élévation selon les plans A' et B' de la figure 4,
- la figure 7 est une vue en perspective de l'appareil de la figure 4 montrant une boucle fluidique, dans laquelle les rotors magnétiques ne sont pas représentés,
- la figure 8 est une vue identique à celle de la figure 7, dans laquelle les rotors magnétiques sont représentés,
- la figure 9 est une vue en perspective de l'appareil de la figure 4 montrant plusieurs boucles fluidiques,
- la figure 10 est une vue en perspective d'une variante de l'appareil représenté à la figure 9, et
   la figure 11 représente les deux supports d'éléments magnétocaloriques vus en élévation selon les plans A' et B' de la figure 4.

### Illustrations de l'invention et différentes manières de la réaliser :

Dans les exemples de réalisation illustrés, les pièces ou parties identiques portent les mêmes références numériques.

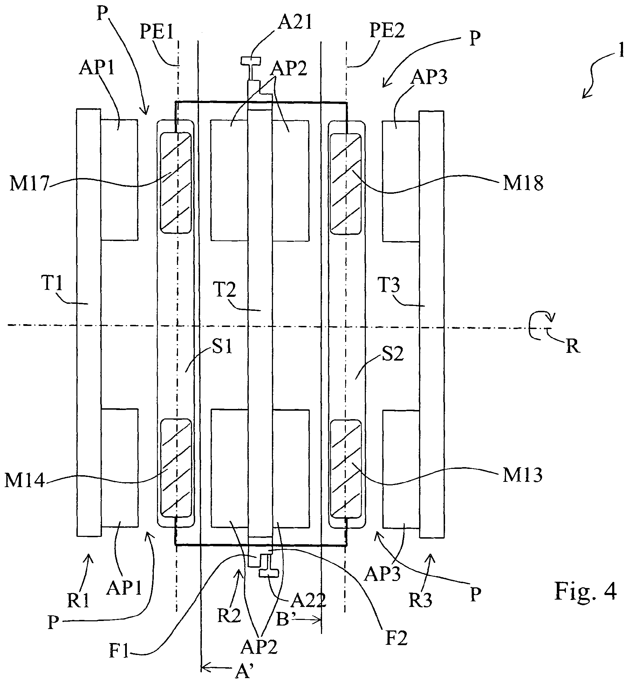

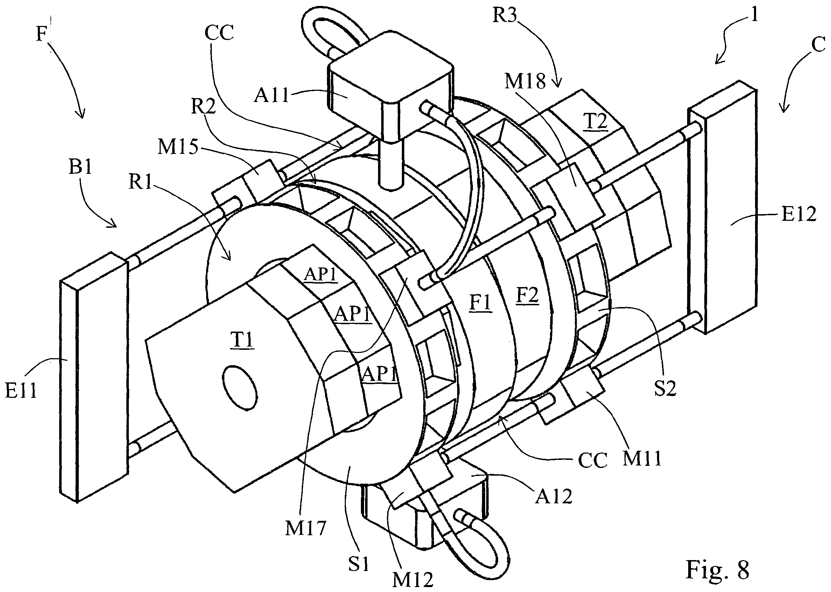

Les dessins des figures 4 à 10 représentent deux variantes de réalisation d'un appareil 1, 1' thermique magnétocalorique selon l'invention. Il comporte un système magnétique avec trois rotors magnétiques R1, R2, R3 qui, par leur rotation autour de l'axe de rotation R, soumettent des éléments magnétocaloriques M11, M12, M13, M14, M15, M16, M17, M18 à une variation de champ magnétique. Les rotors magnétiques R1, R2, R3 comportent des pôles magnétiques. Dans l'exemple, chaque rotor R1, R2, R3 comporte deux pôles magnétiques diamétralement opposés. De plus, les pôles des rotors R1, R2, R3 sont montés alignés entre eux. Ils permettent de créer dans l'appareil quatre entrefers diamétralement opposés deux-à-deux et alignés deux-à-deux, disposés dans deux plans d'entrefers PE1, PE2. Les rotors magnétiques R1, R2, R3 comportent chacun une armature T1, T2, T3 sur laquelle sont montés des aimants permanents AP1, AP2, AP3 susceptibles d'être associés à des éléments ferromagnétiques pour former les pôles magnétiques. Plus précisément, les deux rotors magnétiques R1 et R3 d'extrémité sont dits à simple face c'est à dire qu'ils comportent des aimants d'un seul coté et le rotor magnétique central R2 est dit à double face c'est à dire qu'il comporte des aimants des deux côtés ou des aimants traversants. Les éléments magnétocaloriques M11, M12, M13, M14, M15, M16, M17, M18 sont montés dans deux supports fixes S1, S2 positionnés dans les plans d'entrefer PE1, respectivement PE2 et de ce fait, coaxiaux et parallèles entre eux.

Bien que la présente description présente des rotors magnétiques pourvus de deux pôles, l'invention n'est pas limitée à ce nombre de pôles. Il est bien entendu envisageable de réaliser des rotors comportant plus de pôles, par exemple quatre pôles qui sont diamétralement opposés deux à deux.

Au sens de la présente invention, un élément magnétocalorique peut comporter un ou plusieurs types de matériaux magnétocaloriques. Un élément magnétocalorique peut par exemple comporter plusieurs pièces munies de canaux pour le passage du fluide caloporteur, lesdites pièces étant contigües ou séparées par un élément de calage ou de guidage du fluide caloporteur permettant toutefois une liaison fluidique directe. Un élément magnétocalorique peut être constitué par exemple d'une succession de tronçons de matériaux magnétocaloriques disposés sur ou dans un même support S1 ou S2 et reliés fluidiquement entre eux.

L'appareil selon l'invention comporte au moins une boucle fluidique B1, B2, B3 traversant les éléments magnétocaloriques. Chaque boucle fluidique comporte des liaisons fluidiques reliant en série hydrauliquement plusieurs éléments magnétocaloriques et dans lesquelles circule au moins un fluide caloporteur. Le fluide caloporteur est déplacé dans chaque boucle fluidique par des moyens de déplacement adaptés comme expliqué plus loin.

Dans les éléments magnétocaloriques, le fluide caloporteur circule de leur extrémité froide F vers leur extrémité chaude C au cours d'une première phase du cycle magnétique qui correspond à une phase d'échauffement, dans laquelle les éléments magnétocaloriques sont positionnés dans un entrefer et soumis à un champ magnétique provoquant une hausse de leur température, puis de leur extrémité chaude C vers leur extrémité froide F au cours d'une seconde phase du cycle magnétique qui correspond à une phase de refroidissement, dans laquelle les éléments magnétocaloriques sont positionnés hors d'un entrefer et soumis à un champ magnétique nul provoquant une diminution de leur température.

Pour réaliser le schéma hydraulique illustré à la figure 1 sur une configuration d'appareil telle que celle de la figure 4, en optimisant à la fois la longueur des liaisons fluidiques nécessaires et en réduisant le volume de l'appareil, la demanderesse est allée à l'encontre d'un préjugé qui consiste à positionner d'une part, les éléments magnétocaloriques reliés à l'échangeur chaud EC2 de l'appareil, sur un support SUP2 proche du côté chaud C et d'autre part, à disposer les éléments magnétocaloriques reliés à l'échangeur froid EC1 sur un support SUP1 proche du côté froid F, et de ce fait à relier directement entre eux fluidiquement des éléments magnétocaloriques qui sont dans un même état magnétique et appartenant à un même support.

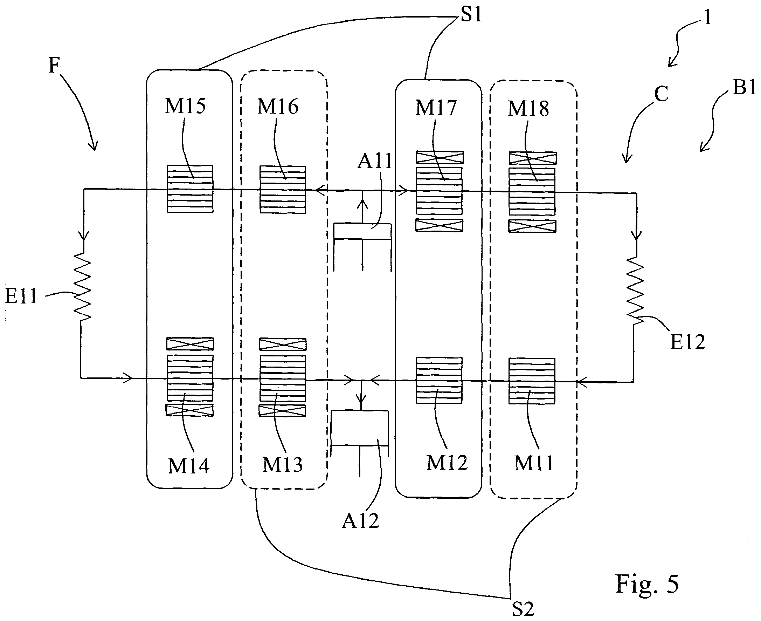

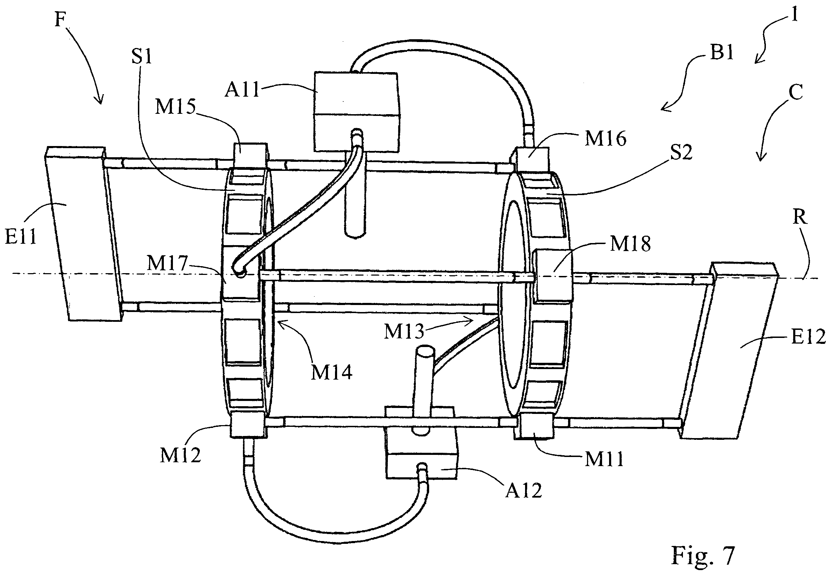

En effet et en référence à la figure 5, dans l'appareil 1 selon l'invention, une boucle fluidique B1 qui relie en série par des liaisons fluidiques huit éléments magnétocaloriques M11, M12, M13, M14, M15, M16, M17, M18, relie respectivement quatre éléments magnétocaloriques M12, M14, M15, M17 d'un premier support S1 directement à quatre éléments magnétocaloriques respectivement M11, M13, M16, M18 du second support S2, lesdits éléments magnétocaloriques étant disposés en regard les uns des autres et dans un même état de magnétisation. Le côté chaud C de l'appareil 1 est situé à droite sur les figures 5 et 7, au niveau de l'échangeur chaud E12 et le côté froid F de l'appareil est situé à gauche, au niveau de l'échangeur froid E11. Par rapport au schéma de la figure 5, il ressort bien de la figure 7, que les éléments magnétocaloriques M13, M14, M15, M16 sont reliés au côté froid ou échangeur froid E11 de l'appareil 1 mais répartis sur les deux supports S1, S2, alors que le support qui est disposé côté froid est le support S1. Il en est de même pour les éléments magnétocaloriques M11, M12, M17, M18 répartis dans les deux supports S1, S2, mais reliés à l'échangeur chaud E12 du côté chaud C de l'appareil 1, alors que le support qui est disposé côté chaud est le support S2.

Un tel arrangement permet de réduire de manière conséquente la longueur des liaisons fluidiques ou conduits nécessaires pour fermer la boucle fluidique, notamment en divisant la longueur par trois par rapport au système classique tel que représenté à la figure 3. Ce résultat est surprenant car au final, une boucle fluidique effectue six passages d'un support S1, S2 à l'autre support S2, S1, à savoir quatre passages directs entre des éléments magnétocaloriques et deux passages par l'intermédiaire des actionneurs A11, A12. Un tel raccourcissement de la longueur des boucles fluidiques est également possible grâce à l'intégration, sur le rotor magnétique central R2 d'une came de commande CC des actionneurs A11, A12 ou pistons. Cette construction permet de resserrer ou rapprocher au maximum les supports S1, S2 d'éléments magnétocaloriques, et de disposer la came de commande CC des actionneurs A11, A12 en-dehors ou à l'extérieur de l'encombrement axial de l'appareil 1 thermique magnétocalorique. Cette construction permet également d'entraîner la came de commande CC en rotation autour de l'axe de rotation R à la même vitesse que les rotors magnétiques R1, R2, R3 directement synchronisée avec les variations de magnétisation. Afin de permettre un déplacement du fluide caloporteur tel que lorsqu'un élément magnétocalorique subit un échauffement, le fluide caloporteur est dirigé vers l'échangeur chaud E12 et que lorsqu'il subit un refroidissement le fluide caloporteur est dirigé vers l'échangeur froid E11, la came de commande CC comporte deux profils de came F1, F2 identiques mais décalés angulairement de 90° autour de l'axe R. Un décalage angulaire est nécessaire et il est dû au positionnement des actionneurs. Il est en effet nécessaire que dans une même boucle fluidique, un actionneur soit dans un état et l'autre actionneur soit dans l'état contraire ou complémentaire. En effet, la boucle fluidique étant fermée, le fluide de la boucle fluidique doit pouvoir se déplacer sans compression du fluide. Dans l'exemple illustré, ce décalage entre les profils est de 90° (correspondant au déphasage de 180° entre les actionneurs d'une boucle fluidique divisé par le nombre de pôles magnétiques, avec ici deux pôles magnétiques) car deux actionneurs d'une même boucle fluidique sont positionnés à 180° et la came de commande est définie pour coïncider avec deux cycles magnétiques.

De manière générale, chaque boucle fluidique B1, B2, B3 relie en série des éléments magnétocaloriques appartenant aux deux supports S1, S2. De plus, l'entraînement ou la distribution du fluide caloporteur à travers les liaisons fluidiques d'une boucle fluidique B1, B2, B3 est central et positionné dans le plan médian du deuxième rotor magnétique R2, entre les deux supports S1 et S2 qui sont disposés symétriquement par rapport audit plan médian. Une boucle fluidique B1, B2, B3 comporte un côté chaud et un côté froid. Le côté chaud de la boucle fluidique est relié thermiquement à un échangeur thermique chaud E12 et le côté froid est relié thermiquement à un échangeur thermique froid E11. Si l'on ne considère pas les rotors magnétiques R1, R2, R3, les supports S1 et S2 sont chacun disposés dans l'appareil thermique entre la distribution centrale et un desdits échangeurs thermiques E11, E12. Les éléments magnétocaloriques M17, M18, M12, M11 disposés dans le côté chaud de la boucle fluidique B1, B2, B3 sont montés dans les deux supports S1 et S2. De la même manière, les éléments magnétocaloriques M15, M16, M14, M13 disposés dans le côté froid de la boucle fluidique B1, B2, B3 sont montés dans les deux supports S1 et S2. En d'autres termes, chaque support S1, S2 comporte à la fois des éléments magnétocaloriques M14, M15 ; M16, M13 qui font partie du côté froid de la boucle fluidique et des éléments magnétocaloriques M17, M12 ; M18, M11 qui font partie du côté chaud de la boucle fluidique, cela, bien que le support S1 soit disposé du côté chaud de l'appareil thermique et que le support S2 soit disposé du côté froid de l'appareil thermique. On obtient une dissociation entre le côté chaud et le côté froid des boucles fluidiques B1, B2, B3 et le côté chaud et le côté froid de l'appareil thermique.

Dans une variante de réalisation non illustrée dans laquelle les rotors ont quatre pôles et dans laquelle les deux actionneurs d'une même boucle fluidique sont positionnés à 180°, les profils des deux cames sont également identiques entre eux mais différents de ceux de la variante à deux pôles. Dans une telle configuration, le déphasage angulaire entre les profils de came serait de 45°.

En référence à la variante illustrée, il apparaît clairement sur les figures 4 et 7 que les deux actionneurs A21, A22 d'une même boucle fluidique B2 situés dans deux positions opposés ne sont pas situés dans un même plan, de manière à pouvoir être entraînés par deux dispositifs différents tels que les deux profils de came F1 et F2. La figure 4 représente la liaison fluidique directe entre les éléments magnétocaloriques M17, M18, et M14, M13 d'une boucle fluidique B1. Elle illustre les actionneurs A21 et A22 d'une autre boucle fluidique B2, sans toutefois illustrer les éléments magnétocaloriques de cette boucle fluidique B2, ni les liaisons fluidiques.

La figure 6 représente schématiquement la boucle fluidique B1 à un instant t dans lequel les éléments magnétocaloriques M17, M18, M14 et M13 sont magnétisés et les éléments magnétocaloriques M15, M16, M11, M12 sont démagnétisés. Cette figure 6 représente les liaisons fluidiques du circuit fluidique B1, les supports S1, S2 des éléments magnétocaloriques vus en élévation selon les plans A' et B' de la figure 4. Les lignes en pointillés illustrent les connexions fluidiques directes entre des éléments magnétocaloriques disposés en regard et dans un même état magnétique. Ces connexions sont de ce fait très courtes puisque les supports S1, S2 sont séparés uniquement par le rotor magnétique central R2. Dans l'art antérieur, les deux supports SUP1, SUP2 étaient séparés par le système de distribution et deux rotors magnétiques. Les actionneurs A11, A12 relient entre eux deux éléments magnétocaloriques M16, M17; M13, M12 décalés d'un angle de 90°. De la même manière, les échangeurs thermiques E11, E12 relient des éléments magnétocaloriques M14, M15; M11, M18 décalés d'un angle de 90°. Il s'agit-là des connexions les plus longues. En comparaison, les boucles fluidiques de l'art antérieur comportent six connexions reliant des éléments magnétocaloriques disposés à 180° les uns des autres, nécessitant beaucoup plus de longueur de tuyaux (plus de trois fois plus).

La figure 7 représente la boucle fluidique B1 de la figure 5 dans un appareil 1 thermique magnétocalorique. Dans cette illustration simplifiée, les rotors magnétiques R1, R2, R3 et la came d'entrainement CC des actionneurs A11, A12 ne sont pas représentés. De plus, afin de faciliter la compréhension, les différents composants de la boucle fluidique B1 ont été exagérément écartés, augmentant de ce fait la longueur des liaisons fluidiques. En référence aux figures 5 à 9, la boucle fluidique B1 relie par l'intermédiaire de liaisons fluidiques des éléments magnétocaloriques disposés dans les deux supports S1, S2, dans l'ordre suivant, à savoir,
- un premier élément magnétocalorique M11 du second support S2 est relié en série directement à
- un premier élément magnétocalorique M12 du premier support S1, disposé en regard et dans un même état magnétique, qui est relié par l'intermédiaire de l'actionneur A12 à
- un second élément magnétocalorique M13 du second support S2, ce second élément magnétocalorique M13 étant dans un état magnétique inverse à celui des premiers éléments magnétocaloriques M11 et M12 et décalé d'un angle de 90° par rapport à l'axe de rotation R par rapport à ces derniers ; ce second élément magnétocaloriques M13 du second support S2 étant relié en série directement à
- un second élément magnétocalorique M14 du premier support S1, disposé en regard et dans un même état magnétique, qui est relié par l'intermédiaire de l'échangeur thermique E11 à
- un troisième élément magnétocalorique M15 du premier support S1, dans un état magnétique inverse et décalé d'un angle de 90°, ce troisième élément magnétocalorique M15 étant relié en série directement à
- un troisième élément magnétocalorique M16 du second support S2, disposé en regard et dans un même état magnétique, qui est relié par l'intermédiaire d'un actionneur A11 à
- un quatrième et dernier élément magnétocalorique M17 du premier support S1, ce dernier élément magnétocalorique M17 étant dans un état magnétique inverse à celui des troisièmes éléments magnétocaloriques M15 et M16 et décalé d'un angle de 90° par rapport à l'axe de rotation R par rapport à ces derniers ; ce quatrième et dernier élément magnétocaloriques M17 du premier support SI étant relié en série directement à
- un quatrième et dernier élément magnétocalorique M18 du second support S2, disposé en regard et dans un même état magnétique, ce quatrième et dernier élément magnétocalorique M18 du second support S2 étant relié par l'intermédiaire de l'échangeur thermique E12 au premier élément magnétocalorique M11 du second support S2, fermant ainsi la boucle fluidique B1.

Les actionneurs A11 et A12 déplacent constamment le fluide caloporteur dans la boucle fluidique B1 simultanément et dans des sens opposés. A l'instant t représenté à la figure 5, l'actionneur A11 pousse le fluide caloporteur et l'actionneur A12 aspire le fluide caloporteur. Bien entendu, le fluide caloporteur est de préférence incompressible.

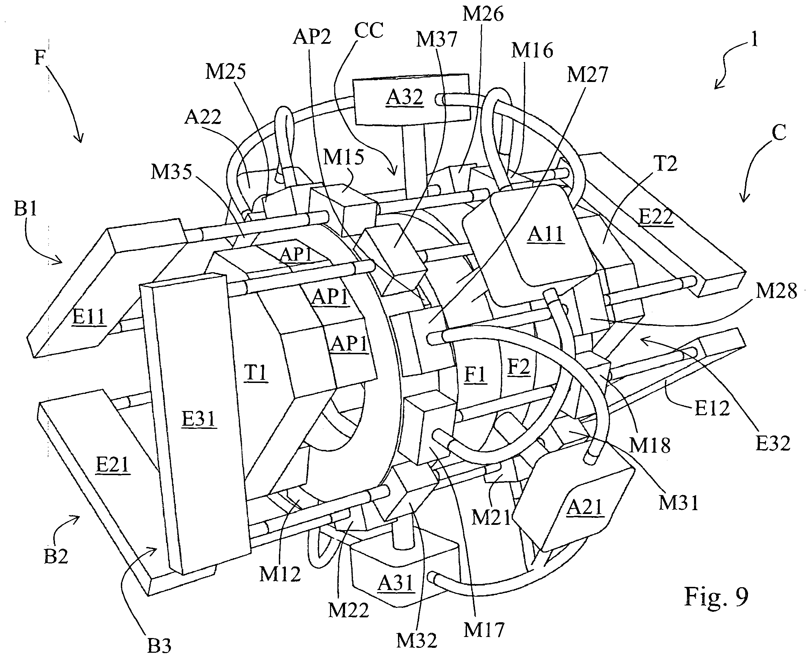

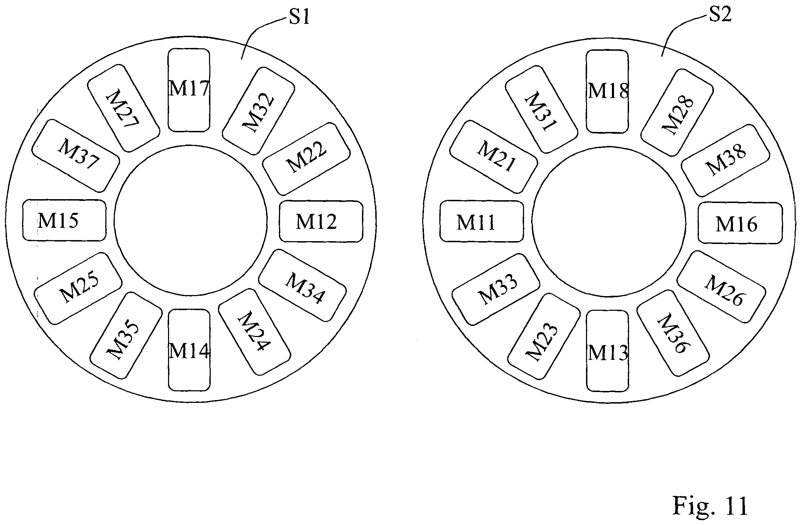

La description relative à la boucle fluidique B1 est bien entendu applicable aux autres boucles fluidiques B2, B3 prévues dans l'appareil 1 selon l'invention. La figure 9 représente l'appareil 1 selon l'invention comportant trois boucles fluidiques B1, B2, B3. Chaque boucle fluidique B1, B2, B3, comporte quatre éléments magnétocaloriques disposés dans le premier support S1 (pour B1 : M12, M17, M15, M14 ; pour B2 : M22, M27, M25, M24 ; pour B3 : M32, M37, M35, M34) et en regard de quatre autres éléments magnétocaloriques auxquels ils sont reliés directement et disposés dans l'autre support S2 (pour B1 : M11, M18, M16, M13 ; pour B2 : M21, M28, M26, M23 ; pour B3 : M31, M38, M36, M33). En référence à la figure 11, les deux supports S1, S2 présentent une configuration géométrique telle que les éléments magnétocaloriques ont une disposition symétrique par rapport au plan médian passant par le rotor magnétique central R2. Bien que les éléments magnétocaloriques soient représentés avec une forme sensiblement parallélépipédique, l'invention n'est pas limitée à une telle géométrie d'éléments magnétocaloriques. Il est possible, à titre d'exemple, de prévoir des éléments magnétocaloriques présentant une forme arquée, ou en V.

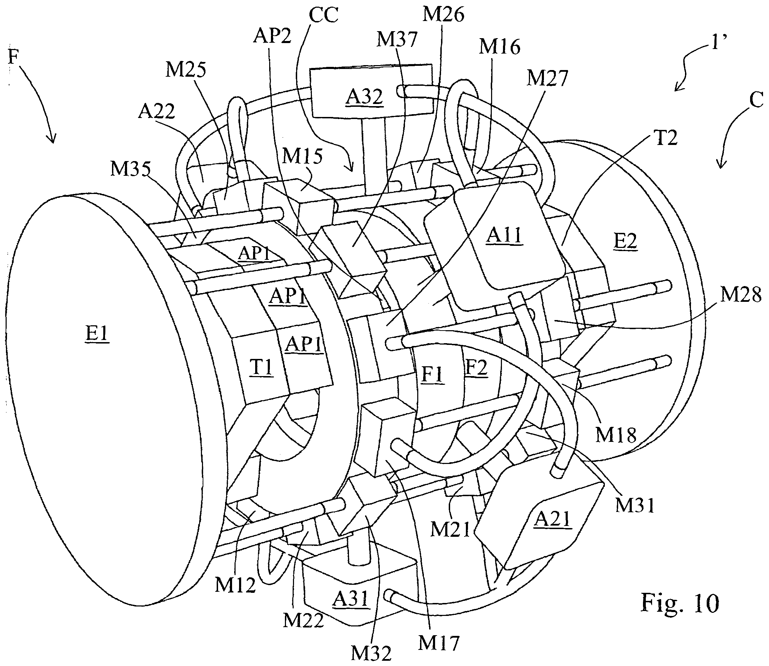

L'appareil thermique 1' représenté à la figure 10 se distingue uniquement de celui de la figure 9 par ses échangeurs thermiques. En effet, toutes les boucles fluidiques de cet appareil 1' sont reliées à un seul échangeur thermique El côté froid et à un seul échangeur thermique E2 côté chaud.

En effet, les boucles fluidiques peuvent être reliées à un seul échangeur thermique commun coté chaud et/ou coté froid, ou peuvent être chacune reliées à un échangeur thermique dédié côté chaud et/ou côté froid.

Comme cela ressort des figures 9 et 10, un seul moyen de commande, sous la forme d'une came de commande CC déplace l'ensemble des actionneurs A11, A12, A21, A22, A31, A32 de l'appareil 1, 1'. Une moitié des actionneurs est entraînée par un premier profil de came F1 et l'autre moitié est entraînée par un second profil de came F2. Cela apparaît également à la figure 6 dans laquelle les actionneurs A11, A12 de la boucle fluidique B1 sont positionnés de manière décalée, chaque actionneur étant effectivement mis en mouvement par un profil de came F1, F2 différent. Les éléments magnétocaloriques des supports S1, S2 sont disposés de manière symétrique par rapport au plan médian de l'appareil 1, 1', et chaque élément magnétocalorique d'un support S1, S2 est relié fluidiquement avec l'élément magnétocalorique de l'autre support S2, S1, disposé en regard comme illustré aux figures 6 et 7.

### Possibilités d'application industrielle :

Il ressort clairement de cette description que l'invention permet d'atteindre les buts fixés, à savoir proposer un appareil thermique magnétocalorique dont la réalisation est structurellement simple et industrialisable. Un tel appareil peut notamment trouver une application aussi bien industrielle que domestique dans le domaine du chauffage, de la climatisation, du tempérage, du refroidissement ou autres, à des coûts compétitifs et avec un faible encombrement.

La présente invention n'est pas limitée aux exemples de réalisation décrits mais s'étend à toute modification et variante évidentes pour un homme du métier tout en restant dans l'étendue de la protection définie dans les revendications annexées.

## Revendications

1. Appareil thermique magnétocalorique (1, 1') comportant au moins :
- trois rotors magnétiques (R1, R2, R3) coaxiaux, couplés à un actionneur pour être mobiles en rotation autour d'un axe de rotation (R), dont deux rotors magnétiques (R1, R3) sont à simple face et un rotor magnétique (R2) central disposé entre les deux autres est à double face, lesdits rotors magnétiques étant pourvus de pôles magnétiques (P) diamétralement opposés, alignés entre eux, et délimitant entre eux des entrefers situés dans deux plans d'entrefer (PE1, PE2) parallèles,
- deux supports (S1, S2) d'éléments magnétocaloriques (M11, M12, M13, M14, M15, M16, M17, M18, M21, M22, M23, M24, M25, M26, M27, M28, M31, M32, M33, M34, M35, M36, M37, M38) disposés dans lesdits plans d'entrefer (PE1, PE2),
- des éléments magnétocaloriques (M11, M12, M13, M14, M15, M16, M17, M18, M21, M22, M23, M24, M25, M26, M27, M28, M31, M32, M33, M34, M35, M36, M37, M38) portés par lesdits deux supports (S1, S2) et reliés fluidiquement entre eux par des liaisons fluidiques dans lesquelles circule au moins un fluide caloporteur et formant au moins une boucle fluidique (B1, B2, B3) déterminées, et
- des moyens de déplacement dudit fluide caloporteur dans ladite boucle fluidique (B1, B2, B3) à travers lesdits éléments magnétocaloriques selon un mouvement alterné de va-et-vient en fonction des cycles magnétiques créés par lesdits rotors magnétiques,
- lesdites liaisons fluidiques reliant en série deux-à-deux dans ladite boucle fluidique (B1, B2, B3) des éléments magnétocaloriques (M11, M12 ; M13, M14 ; M15, M16 ; M17, M18 ; M21, M22 ; M23, M24 ; M25, M26 ; M27, M28 ; M31, M32 ; M33, M34 ; M35, M36 ; M37, M38) appartenant respectivement aux deux supports (S1, S2), lesdits éléments magnétocaloriques reliés deux-à-deux étant dans un même état magnétique et positionnés en regard l'un de l'autre.

2. Appareil thermique, selon la revendication 1, **caractérisé en ce que** chaque boucle fluidique (B1, B2, B3) comporte des premiers éléments magnétocaloriques (M17, M14 et M18, M13 ; M22, M25 et M21, M26 ; M32, M35 et M31, M36) de chaque support (S1, S2) dans un état magnétique identique et des seconds éléments magnétocaloriques (M15, M12 et M11, M16 ; M24, M27 et M23, M28 ; M34, M37 et M33, M38) de chaque support (S1, S2) dans un état magnétique inverse, et **en ce que** lesdits moyens de déplacement sont diamétralement opposés et agencés pour déplacer le fluide caloporteur dans deux sens opposés.

3. Appareil thermique, selon l'une quelconque des revendications précédentes, **caractérisé en ce que** les moyens de déplacement comprennent des actionneurs (A11, A12, A21, A22, A31, A32) positionnés de manière centrale par rapport au plan médian de l'appareil thermique (1, 1') passant par le rotor magnétique central (R2).

4. Appareil thermique, selon la revendication 3, **caractérisé en ce que** ledit rotor magnétique central (R2) comporte au moins un moyen de commande (CC) desdits actionneurs (A11, A12 ; A21, A22 ; A31, A32).

5. Appareil thermique, selon la revendication 4, **caractérisé en ce que** ledit moyen de commande (CC) des actionneurs (A11, A12; A21, A22 ; A31, A32) comporte au moins deux profils de came (F1, F2), chaque profil de came étant agencé pour entraîner un des deux actionneurs (A11, A12 ; A21, A22 ; A31, A32) de chaque boucle fluidique (B1, B2, B3).

6. Appareil thermique, selon la revendication 5, **caractérisé en ce que** les profils de came (F1, F2) sont identiques, mais décalés d'un angle de 90° autour de l'axe de rotation (R).

7. Appareil thermique, selon l'une quelconque des revendications précédentes, **caractérisé en ce qu'**il comporte plusieurs boucles fluidiques (B1, B2, B3) et **en ce que** les actionneurs (A11, A12; A21, A22 ; A31, A32) associés auxdites boucles fluidiques sont uniformément répartis autour de l'axe de rotation (R).

8. Appareil thermique, selon l'une quelconque des revendications précédentes, **caractérisé en ce que** les éléments magnétocaloriques portés par lesdits supports (S1, S2) sont disposés de manière symétrique par rapport au plan médian de l'appareil thermique (1, 1') passant par le rotor magnétique central (R2).

9. Appareil thermique, selon l'une quelconque des revendications précédentes, **caractérisé en ce que** toutes les boucles fluidiques (B1, B2, B3) sont reliées fluidiquement à un échangeur thermique (E1) commun au niveau du côté froid (F) de l'appareil thermique (1') et/ou à un échangeur thermique (E2) commun au niveau du côté chaud (C) de l'appareil thermique (1').

10. Appareil thermique, selon l'une quelconque des revendications 1 à 8, **caractérisé en ce que** chaque boucle fluidique (B1, B2, B3) est reliée fluidiquement à un échangeur thermique (E11, E21, E31) qui lui est associé au niveau du côté froid (F) de l'appareil thermique (1) et/ou à un échangeur thermique (E12, E22, E32) qui lui est associé au niveau du côté chaud (C) de l'appareil thermique (1).

11. Appareil thermique, selon la revendication 1, **caractérisé en ce que** chaque rotor magnétique comporte au moins deux paires de pôles magnétiques.

## Patentansprüche

1. Magnetokalorische Wärmevorrichtung, (1, 1'), die mindestens enthält:
- drei koaxiale magnetische Rotoren (R1, R2, R3), so mit einem Antrieb verbunden, dass sie um eine Drehachse (R) drehbar sind, zwei dieser magnetischen Rotoren (R1, R3) sind einseitig und ein zentraler Magnetrotor (R2), der zwischen den beiden anderen angeordnet ist, ist doppelseitig, diese Magnetrotoren verfügen über diametral gegenüberliegende Magnetpole (P), die zueinander ausgerichtet sind und zwischen sich zwei Polspalten, die in zwei parallelen Polspaltebenen (PE1, PE2) liegen, definieren;
- zwei Halterungen (S1, S2) für magnetokalorische Elemente (M11, M12, M13, M14, M15, M16, M17, M18, M21, M22, M23, M24, M25, M26, M27, M28, M31, M32, M33, M34, M35, M36, M37, M38), die in diesen Polspaltebenen (PE1, PE2), angeordnet sind;
- magnetokalorische Elemente (M11, M12, M13, M14, M15, M17, M18, M21, M22, M23, M24, M25, M26, M27, M28, M31, M32, M33, M34, M35, M36, M37, M38), getragen von den erwähnten Halterungen (S1, S2) und über eine Flüssigkeitsverbindung miteinander flüssig verbunden, in denen mindestens eine Wärmeträgerflüssigkeit fließt, und die mindestens eine bestimmten Füssigkeitsschleife ((B1, B2, B3) bilden, und.
- Mittel zum Transport der erwähnten Wärmeträgerflüssigkeit in der erwähnten Flüssigkeitsschleife (BI, B2, B3) durch diese magnetokalorischen Elemente gemäß einer alternierenden Hin-und-Her-Bewegung entsprechend den Magnetzyklen, die von den erwähnten Magnetrotoren erzeugt werden,
- diese Flüssigkeitsverbindungen verbinden dabei in der erwähnten Flüssigkeitsschleife (BI, B2, B3) in Reihe und paarweise magnetokalorische Elemente (M11, M12; M13, M14; M15, M16; M17, M18; M21, M22; M23, M24; M25, M26; M27, M28; M31, M32; M33, M34; M35, M36; M37, M38), die jeweils zu den beiden Halterungen (SI, S2) gehören, diese paarweise verbundenen magnetokalorischen Elemente befinden sich im selben Magnetzustand und sind einander gegenüberliegend angeordnet.

2. Magnetokalorische Wärmevorrichtung nach Anspruch 1, **dadurch gekennzeichnet, dass** jede Flüssigkeitsschleife (B1, B2, B3) erste magnetokalorische Elemente (M17, M14 und M18, M13; M22, M25 und M21, M26; M32, M35 und M31, M36) jeder Halterung (S1, S2) im selben Magnetzustand enthält und zweite magnetokalorische Elemente (M15, M12 und M11, M16; M24, M27 und M23; M28; M34, M37 und M33, M38) jeder Halterung (S1, S2) im entgegengesetzten Magnetzustand und dadurch, dass die erwähnten Transportmittel diametral entgegengesetzt und so angeordnet sind, dass die Wärmeträgerflüssigkeit in zwei entgegengesetzte Richtungen geleitet wird.

3. Magnetokalorische Wärmevorrichtung nach irgendeinem der vorangehenden Ansprüche, **dadurch gekennzeichnet, dass** die Transportmittel Antriebe (A11, A12, A21, A22, A31, A32) enthalten, die, bezogen auf die mittlere Ebene der magnetokalorischen Wärmevorrichtung (1, 1 '), die durch den zentralen Magnetrotor (R2) führt, zentral angeordnet sind

4. Magnetokalorische Wärmevorrichtung nach Anspruch 3, **dadurch gekennzeichnet, dass** der erwähnte zentrale Magnetrotor (R2) mindestens eine Steuerungsvorrichtung (CC) dieser Antriebe (A11, A12; A21, A22; A31, A32) enthält.

5. Magnetokalorische Wärmevorrichtung nach Anspruch 4, **dadurch gekennzeichnet, dass** diese Steuerungsvorrichtung (CC) der Antriebe (A11, A12; A21, A22: A31, A32) mindestens zwei Nockenprofile (FI, F2) enthält, wobei jedes Nockenprofil so vorgesehen ist, dass es einen der beiden Antriebe (A11, A11; A21, A22; A31, A32) jeder Flüssigkeitsschleife (BI, B2, B3) antreibt.

6. Magnetokalorische Wärmevorrichtung nach Anspruch 5, **dadurch gekennzeichnet, dass** die Nockenprofile (FI, F2) identisch, aber in einem Winkel von 90° um die Drehachse (R) versetzt sind.

7. Magnetokalorische Wärmevorrichtung nach irgendeinem der vorangehenden Ansprüche, **dadurch gekennzeichnet, dass** sie mehrere Flüssigkeitsschleifen (B I, B2, B3) enthält und dass die Antriebe (A11, A12; A21, A22; 31, A32), die mit diesen Flüssigkeitsschleifen verbunden sind, gleichmäßig um die Drehachse (R) verteilt sind.

8. Magnetokalorische Wärmevorrichtung nach irgendeinem der vorangehenden Ansprüche, **dadurch gekennzeichnet, dass** die von diesen Halterungen (S1, S2) gehaltenen magnetokalorischen Elemente, bezogen auf die mittlere Ebene der magnetokalorischen Wärmevorrichtung (1, 1'), die durch den zentralen Magnetrotor (R2) führt, symmetrisch angeordnet sind.

9. Magnetokalorische Wärmevorrichtung nach irgendeinem der vorangehenden Ansprüche, **dadurch gekennzeichnet, dass** alle Flüssigkeitsschleifen (B1, B2. B3) in Flüssigkeitsverbindung mit einem Wärmetauscher (E11) stehen, der auch mit der kalten Seite (F) der Wärmevorrichtung (1 ') verbunden ist und/ oder einem Wärmetauscher (E2), der auch mit der warmen Seite (C) der Wärmevorrichtung (1') verbunden ist.

10. Magnetokalorische Wärmevorrichtung nach irgendeinem der vorangehenden Ansprüche 1 bis 8, **dadurch gekennzeichnet, dass** jede Flüssigkeitsschleife (BI, B2, B3) in Flüssigkeitsverbindung mit einem Wärmetauscher (E11, E21, E31) steht, der mit ihr auf der kalten Seite (F) der Wärmevorrichtung (1') verbunden ist und/ oder mit einem Wärmetauscher (E12, E22, E32) der mit der warmen Seite (C) der Wärmevorrichtung (1) verbunden ist.

11. Magnetokalorische Wärmevorrichtung nach 1, **dadurch gekennzeichnet, dass** jeder Magnetrotor mindestens zwei Paare Magnetpole enthält.

## Claims

1. Magnetocaloric thermal appliance (1, 1') comprising at least:
- three coaxial magnetic rotors (R1, R2, R3), coupled with an actuator so as to be rotatable about a rotational axis (R), of which two magnetic rotors (R1, R3) are single-faced and a central magnetic rotor (R2) arranged between the two others is double-faced, said magnetic rotors being provided with diametrally opposed magnetic poles (P), aligned with each other, and delimiting between each other air gaps located in two parallel air gap planes (PE1, PE2),
- two holders (S1, S2) for magnetocaloric elements (M11, M12, M13, M14, M15, M16, M17, M18, M21, M22, M23, M24, M25, M26, M27, M28, M31, M32, M33, M34, M35, M36, M37, M38) located in said air gap planes (PE1, PE2),
- magnetocaloric elements (M11, M12, M13, M14, M15, M16, M17, M18, M21, M22, M23, M24, M25, M26, M27, M28, M31, M32, M33, M34, M35, M36, M37, M38) carried by said two holders (S1, S2) and in fluidic communication with each other by means of fluidic connections wherein at least one heat transfer fluid circulates and forming at least one determined fluidic loop (B1, B2, B3), and
- means for circulating said heat transfer fluid in said fluidic loop (B1, B2, B3) through said magnetocaloric elements according to a reciprocating forth and back movement in function of the magnetic cycles created by said magnetic rotors,
said fluidic connections connecting serially two by two in said fluidic loop (B1, B2, B3) magnetocaloric elements (M11, M12; M13, M14; M15, M16; M17, M18; M21, M22; M23, M24; M25, M26; M27, M28; M31, M32; M33, M34; M35, M36; M37, M38) that belong respectively to the two holders (S1, S2), said magnetocaloric elements connected two by two being in a same magnetic state and positioned in front of each other.

2. Thermal appliance according to claim 1, **characterized in that** every fluidic loop (B1, B2, B3) comprises first magnetocaloric elements (M17, M14 and M18, M13; M22, M25 and M21, M26; M32, M35 and M31, M36) of every holder (S1, S2) in an identical magnetic state and second magnetocaloric elements (M15, M12 and M11, M16; M24, M27 and M23, M28; M34, M37 and M33, M38) of every holder (S1, S2) in a reversed magnetic state, and **in that** said displacement means are diametrally opposed and arranged for displacing the heat transfer fluid in two opposite directions.

3. Thermal appliance according to any of the previous claims, **characterized in that** the displacement means comprise actuators (A11, A12, A21, A22, A31, A32) positioned centrally with respect to the median plane of thermal appliance (1, 1') passing through central magnetic rotor (R2).

4. Thermal appliance according to claim 3, **characterized in that** said central magnetic rotor (R2) comprises at least one means (CC) for controlling said actuators (A11, A12; A21, A22; A31, A32).

5. Thermal appliance according to claim 4, **characterized in that** said means (CC) for controlling the actuators (A11, A12; A21, A22; A31, A32) comprises at least two cam profiles (F1, F2), each cam profile being arranged for driving one of the two actuators (A11, A12; A21, A22; A31, A32) of every fluidic loop (B1, B2, B3).

6. Thermal appliance according to claim 5, **characterized in that** the cam profiles (F1, F2) are identical, but offset by an angle of 90° about rotational axis (R).

7. Thermal appliance according to any of the previous claims, **characterized in that** it comprises several fluidic loops (B1, B2, B3) and **in that** the actuators (A11, A12; A21, A22; A31, A32) associated with said fluidic loops are uniformly distributed about rotational axis (R).

8. Thermal appliance according to any of the previous claims, **characterized in that** the magnetocaloric elements carried by said holders (S1, S2) are arranged symmetrically with respect to the median plane of thermal appliance (1, 1') that passes through central magnetic rotor (R2).

9. Thermal appliance according to any of the previous claims, **characterized in that** all fluidic loops (B1, B2, B3) are in fluidic communication with a common heat exchanger (E1) at the level of the cold side (F) of thermal appliance (1') and/or with a common heat exchanger (E2) at the level of the hot side (C) of thermal appliance (1').

10. Thermal appliance according to any of claims 1 to 8, **characterized in that** each fluidic loop (B1, B2, B3) is in fluidic communication with a heat exchanger (E11, E21, E31) that is associated to it at the level of the cold side (F) of thermal appliance (1) and/or with a heat exchanger (E12, E22, E32) that is associated to it at the level of the hot side (C) of thermal appliance (1).

11. Thermal appliance according to claim 1, **characterized in that** each magnetic rotor comprises at least two pairs of magnetic poles.
